# EUROPÄISCHE PATENTSCHRIFT

(11) **EP 2 344 735 B1**
(45) Veröffentlichungstag und Bekanntmachung des Hinweises auf die Patenterteilung: **05.06.2013**
(21) Anmeldenummer: 09778309.6
(22) Anmeldetag: 03.09.2009
(51) Int. Cl.: F01N 3/20

(54) **KOMPONENTENTRÄGER FÜR EIN DOSIERSYSTEM**
COMPONENT HOLDER FOR A DOSING SYSTEM
SOUTIENT DE COMPOSANT POUR UN SYSTEME DE DOSAGE

(30) Priorität: 13.11.2008 DE 102008057258
(43) Veröffentlichungstag der Anmeldung: 20.07.2011
(73) Patentinhaber: Albonair GmbH, 44263 Dortmund (DE)
(72) Erfinder: OVERHOFF, Werner, 45772 Marl (DE); KASSEL, Armin, 58119 Hagen (DE)
(74) Vertreter: Methling, Frank-Oliver
(86) Internationale Anmeldenummer: PCT/EP2009/006389
(87) Internationale Veröffentlichungsnummer: WO 2010/054710

(56) Entgegenhaltungen:
- EP-A1- 1 662 103
- EP-A1- 1 712 754
- DE-A1-102006 017 414
- DE-C1- 4 438 093
- US-A1- 2008 092 531

## Beschreibung

Die Erfindung betrifft einen Komponententräger eines Dosiersystems zur Eindüsung einer Harnstofflösung in den Abgasstrom eines Verbrennungsmotors zur selektiven katalytischen Reduktion, wobei das Dosiersystem mit einem Harnstofflösungstank verbindbar/verbunden ist, aus dem Harnstofflösung entnehmbar ist, und wobei das Dosiersystem mit einer Druckluftversorgung verbindbar/verbunden ist, wobei das Dosiersystem eine Pumpe zur Förderung der Harnstofflösung aufweist und wobei das Dosiersystem zumindest eine Düse aufweist, durch die mittels Druckluft die Harnstofflösung in den Abgasstrom einspritzbar ist.

Sogenannte SCR- Katalysatoren werden eingesetzt, um die Stickoxydemission von Dieselmotoren zu vermindern. Hierzu wird ein Reduktionsmittel in das Abgassystem mit einer Dosiervorrichtung eingedüst. Als Reduktionsmittel dient Ammoniak.

Da das mitführen von Ammoniak in Fahrzeugen sicherheitskritisch ist, wird Harnstoff in wässriger Lösung mit üblicherweise 32,5 % Harnstoffanteil, insbesondere gemäß DIN 70070, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR- Katalysatoren wird durch selektive katalytische Reduktion (englisch: selective catalyic reduction, SCR) der Ausstoß von Stickoxyden um etwa 90 % reduziert. Die verwendete Harnstofflösung gemäß DIN 70070 wird auch als sogenanntes AdBlue bezeichnet.

Die Harnstofflösung wird mittels eines Dosiersystems dosiert, in den Abgasstrom eingespritzt und sorgt im SCR- Katalysator für die gewünschte chemische Reaktion. Hierbei werden die Stickoxyde in Stickstoff und Wasserdampf umgewandelt.

Die Harnstofflösung gefriert bei -11 °C. Um einen Betrieb des Dosiersystems zur Einspritzung von Harnstofflösung wie AdBlue in das Abgas auch unterhalb dieser Temperatur zu gewährleisten, müssen die Systemkomponenten beheizt werden. Hierzu kommen elektrische Widerstandselemente zum Einsatz.

Nachteilig ist dabei, dass zur Beheizung elektrische Energie benötigt wird. Weiterhin nachteilig ist, dass das Dosiersystem sehr komplex und aufwändig wird, da eine Vielzahl verschiedener Komponenten beheizt werden müssen mit einer dementsprechend großen Anzahl von elektrischen Heizelementen.

Aus der EP 1 622 103 A1 ist ein Dosiersystem zur Eindüsung einer Harnstofflösung in den Abgasstrom eines Verbrennungsmotors zur selektiven katalytischen Reduktion bekannt, beim dem eine Temperierungsvorrichtung innerhalb des Harnstofflösungstanks angeordnet ist, wobei eine Kühlmittelleitung des Verbrennungsmotors durch den Harnstofflösungstank geführt ist und die Harnstofflösung durch Wärmeübertragung zwischen der Harnstofflösung und dem Kühlmittel erhitzt oder abgekühlt wird.

Aus der EP 1 712 754 A1 ist ein Dosiersystem zur Eindüsung einer Harnstofflösung in den Abgasstrom eines Verbrennungsmotors zur selektiven katalytischen Reduktion bekannt, beim dem die Harnstofflösung entgegen der Strömungsrichtung des Abgasstromes eingespritzt wird.

Aus der DE 44 38 093 C1 ist ein Be- und Entlüftungsschlauch für Teile von Kraftfahrzeugmotoren bekannt, wobei der Schlauch einen vom dem Kühlmedium des Motors durchströmbaren Heizkanal aufweist, so dass bei tiefen Temperaturen die Gefahr des Zufrierens durch Kondenswasser beseitigt ist.

Die Aufgabe der Erfindung ist es, ein Dosiersystem zur Verfügung zu stellen, bei dem eine Beheizung der Systemkomponenten möglich ist und gleichzeitig der anlagentechnische Aufwand reduziert wird und das Dosiersystem einen einfachen Aufbau aufweist.

Diese Aufgabe wird erfindungsgemäß durch einen Komponententräger für ein Dosiersystem gemäß Anspruch 1 gelöst, durch ein Dosiersystem zur Eindüsung einer Harnstofflösung gemäß Anspruch 12 gelöst sowie durch eine Anordnung gemäß Anspruch 14 gelöst. Vorteilhafte Ausgestaltungen der Erfindung sind in den abhängigen Ansprüchen angegeben.

Besonders vorteilhaft bei dem Komponententräger eines Dosiersystems zur Eindüsung einer Harnstofflösung in den Abgasstrom eines Verbrennungsmotors zur selektiven katalytischen Reduktion, wobei das Dosiersystem mit einem Harnstofflösungstank verbindbar/verbunden ist, aus dem Harnstofflösung entnehmbar ist, und wobei das Dosiersystem mit einer Druckluftversorgung verbindbar/verbunden ist, wobei das Dosiersystem eine Pumpe zur Förderung der Harnstofflösung aufweist und wobei das Dosiersystem zumindest eine Düse aufweist, durch die mittels Druckluft die Harnstofflösung in den Abgasstrom einspritzbar ist, ist es, dass Komponenten des Dosiersystems in thermischem Kontakt zu dem Komponententräger an dem Komponententräger montierbar/montiert sind und der Komponententräger zumindest einen Kontaktbereich zur Herstellung eines thermischen Kontaktes zu einem Fluid mit höherer Temperatur aufweist, insbesondere zum Kühlmittelkreislauf des Verbrennungsmotors, sodass der Komponententräger eine Wärmesenke bilden kann/bildet und erwärmbar ist/erwärmt wird, sodass eine Erwärmung der auf dem Komponententräger montierbaren/montierten Komponenten erfolgt/erfolgen kann.

Bei den an oder auf dem Komponententräger montierbaren/montierten Komponenten des Dosiersystems kann es sich um die Pumpe und/oder eine Harnstofflösungsleitung und/oder eine Druckluftleitung und/oder Ventile wie Steuerventil/e und/oder Rückschlagventil/e und/oder Anschlüsse handeln.

Bei dem Dosiersystem zur Eindüsung einer Harnstofflösung in den Abgasstrom eines Verbrennungsmotors zur selektiven katalytischen Reduktion, wobei das Dosiersystem mit einem Harnstofflösungstank verbindbar/verbunden ist, aus dem Harnstofflösung entnehmbar ist, und wobei das Dosiersystem mit einer Druckluftversorgung verbindbar/verbunden ist, wobei das Dosiersystem eine Pumpe zur Förderung der Harnstofflösung aufweist und wobei das Dosiersystem zumindest eine Düse aufweist, durch die mittels Druckluft die Harnstofflösung in den Abgasstrom einspritzbar ist, ist es besonders vorteilhaft, dass das Dosiersystem einen erfindungsgemäßen Komponententräger aufweist und Komponenten des Dosiersystems, insbesondere die Pumpe und/oder eine Harnstofflösungsleitung und/oder eine Druckluftleitung und/oder Ventile und/oder Anschlüsse, in thermischem Kontakt zu dem Komponententräger auf dem Komponententräger montiert sind, wobei der Komponententräger in thermischem Kontakt zu einem Kühlmittelkreislauf des Verbrennungsmotors steht/stehen kann.

Besonders vorteilhaft bei der Anordnung eines Komponententrägers eines Dosiersystems zur Eindüsung einer Harnstofflösung in den Abgasstrom eines Verbrennungsmotors zur selektiven katalytischen Reduktion, wobei das Dosiersystem mit einem Harnstofflösungstank verbunden ist, aus dem Harnstofflösung entnehmbar ist, und wobei das Dosiersystem mit einer Druckluftversorgung verbunden ist, wobei das Dosiersystem eine Pumpe zur Förderung der Harnstofflösung aufweist und wobei das Dosiersystem zumindest eine Düse aufweist, durch die mittels Druckluft die Harnstofflösung in den Abgasstrom einspritzbar ist, ist es, dass Komponenten des Dosiersystems, insbesondere die Pumpe und/oder eine Harnstofflösungsleitung und/oder eine Druckluftleitung und/oder Ventile und/oder Anschlüsse, in thermischem Kontakt zu dem Komponententräger auf diesem montiert sind, wobei der Komponententräger thermisch in Kontakt mit dem Kühlmittelkreislauf des Verbrennungsmotors steht und eine Wärmesenke des Kühlmittelkreislaufs bildet.

Mit thermischem Kontakt ist dabei gemeint, dass ein wärmeleitender Kontakt geschaffen wird, der einen Wärmeübergang ermöglicht. Der Komponententräger ist somit in den Kühlmittelkreislauf des Verbrennungsmotors wärmetechnisch eingebunden, sodass Abwärme des Verbrennungsmotors über dessen Kühlmittel auf den Komponententräger und über den Komponententräger auf verschiedene Komponenten des Dosiersystems übertragen werden, sodass eine Beheizung dieser Komponenten mittels der Abwärme des Verbrennungsmotors erfolgt. Der Komponententräger bildet somit eine Wärmesenke im Kühlmittelkreislauf des Verbrennungsmotors.

Dass Komponenten auf dem Komponententräger montierbar/montiert sind bedeutet nicht einschränkend, dass diese in einer bestimmten Position relativ zu dem Komponententräger, beispielsweise vertikal oberhalb des Komponententrägers, angeordnet sind, sondern vielmehr, dass die Komponenten in beliebiger Position relativ zum Komponententräger an diesem montierbar/montiert sind und ein Wärmeübergang vom Komponententräger zu den Komponenten hin oder umgekehrt möglich ist. Es besteht somit auch die Möglichkeit, die Abwärme der Förderpumpe über den Komponententräger auf andere Komponenten zu übertragen.

Hierdurch ist in einfacher Weise eine Anordnung und Beheizung der Komponenten eines Dosiersystems zur Eindüsung einer Harnstofflösung in den Abgasstrom eines Verbrennungsmotors zur selektiven katalytischen Reduktion auf einer gemeinsamen Grundplatte möglich, insbesondere kann eine Vormontage des Dosiersystems erfolgen, sodass dieses als ein komplettes Modul, montiert auf dem Komponententräger, montierbar ist.

Vorzugsweise ist der Kontaktbereich des Komponententrägers durch zumindest eine Ausnehmung und/oder Aufnahme gebildet ist, in die eine den Komponententräger erwärmende Leitung einlegbar/eingelegt ist, wobei die Leitung ein Fluid mit erhöhter Temperatur führt, sodass der Komponententräger eine Wärmesenke bilden kann/bildet.

Vorzugsweise weist der Komponententräger mehrere außenseitig angeordnete Nuten und/oder Aufnahmen auf, in die Leitungen einlegbar/eingelegt sind, die ein Fluid mit erhöhter Temperatur führen.

Besonders bevorzugt handelt es sich bei der Leitung/den Leitungen um Kühlmittelleitungen und/oder Kühlmittelschläuche des Verbrennungsmotors.

Eine Beheizung der Komponenten des Dosiersystems erfolgt somit bevorzugt über eingeclipste Kühlwasserschläuche.

Hierdurch kann die Abwärme des Verbrennungsmotors in vorteilhafter und einfacher Weise genutzt werden, um die Komponenten des Dosiersystems zu beheizen. Alternativ oder kumulativ ist durch eine Wärmeübertragung über den Komponententräger auch die Nutzung der Abwärme von Systemkomponenten wie Pumpe oder Proportionalregelventil möglich, um die Harnstofflösung führenden Bauteile und Komponenten zu beheizen.

Besonders bevorzugt besteht der Komponententräger aus einem Metall oder einer Legierung, welches gute Wärmeleitungseigenschaften aufweist, insbesondere Aluminium oder einer Aluminium-Legierung, und/oder der Komponententräger ist gebildet aus einer Grundplatte, insbesondere einer Kunststoffplatte, die eine wärmeleitende Beschichtung aufweist, insbesondere von einem Aluminiumblech umhüllt wird.

Vorzugsweise ist der Komponententräger durch eine Metallplatte gebildet, die eine Längserstreckung aufweist, wobei die Nut/Nuten und/oder Aufnahme/Aufnahmen längs der Platte verläuft/verlaufen, sodass ein großer Kontaktbereich gebildet wird.

Durch eine entsprechende Materialwahl eines Materials mit guten Wärmeleitungseigenschaften für den Komponententräger und eine vorteilhafte geometrische Gestaltung des/der Kontaktbereiche/s kann der Wärmeübergang auf die zu beheizenden Komponenten optimiert werden.

Besonders bevorzugt weist der Komponententräger zumindest im Bereich der Kontaktbereiche, insbesondere der Nut/Nuten und/oder Aufnahme/Aufnahmen, einen hohen Wärmeübergangskoeffizienten auf.

Vorzugsweise weist der Komponententräger zumindest im Bereich der Kontaktbereiche, insbesondere Nut/Nuten und/oder Aufnahme/Aufnahmen eine hohe Wärmeleitfähigkeit aufweist.

Hierdurch kann der Wärmeübergang hin zum Komponententräger erleichtert und optimiert werden. Es können zur Verbesserung des Wärmeübergangs Zusatzstoffe wie Kontaktgel oder dergleichen in den Kontaktbereich eingebracht werden.

Vorzugsweise sind die Leitungen in Nuten und/oder in Aufnahmen einclipsbar/eingeclipst. Dies erleichtert die Montage und das Einsetzen der Leitungen zur Schaffung der wärmeleitenden Verbindung zwischen den Leitungen und dem Komponententräger.

Besonders bevorzugt weist der Komponententräger Montageelemente auf, insbesondere schwalbenschwanzförmige Elemente, mittels derer er in entsprechenden Aufnahmen montierbar ist, insbesondere Montageelemente aus einem dämpfenden Werkstoff, insbesondere Gummi.

Hierdurch ist eine einfache und schnelle Montage des Komponententrägers respektive der vormontierten Baugruppe bestehend aus dem Komponententräger und den daran vormontierten Komponenten beim Einbau des Dosiersystems möglich. Vorzugsweise erfolgt eine Anordnung des Dosiersystems an oder auf dem Harnstofflösungstank. Hierzu weist der Harnstofflösungstank entsprechende Schwalbenschwanznuten auf, in die die Schwalbenschwanzelemente des Komponententrägers eingeschoben werden. Vorzugsweise bestehen die an dem Komponententräger angeordneten Montageelemente aus einem schwingungsdämpfenden Werkstoff wie Gummi oder dergleichen, sodass Schwingungen nicht übertragen werden, sodass eine Entkopplung von Pumpe und Tank ermöglicht wird.

Bei den in Kraftfahrzeugen derzeit eingesetzten Systemen werden Druckluft und Harnstoff in einer Mischkammer zusammengeführt und über eine einfache Lochdüse in das Abgas eingesprüht. Der Luftmassenstrom ist hierbei auf einen konstanten Wert eingestellt um ein Rückströmen des Harnstoffes in den Luftstrom vor der Mischkammer zu vermeiden. Hierdurch wird eine definierte Grenze zwischen harnstoffführenden Bereichen und harnstofffreien Bereichen dargestellt und eine Kristallbildung des Harnstoffs im Mischsystem vermieden. Bereiche in dem Dosiersystem, in die Harnstoff nur zeitweise eintritt, müssen vermieden werden, da hier die Gefahr besteht, dass die wässrige Harnstofflösung trocknet, der Harnstoff Kristalle bildet und die Luftkanäle bzw. Harnstoffkanäle verstopfen.

Nachteilig ist dabei die Verstopfungsneigung in Folge einer Kristallbildung durch Harnstoff. Derartige Kristalle können mittels flüssigen Harnstoffes wieder gelöst werden. Jedoch kann ein zumindest zeitweises Verstopfen der Systeme nicht vermieden werden.

Nutzfahrzeuge besitzen im Allgemeinen ein Druckluftsystem für die Bremsanlage sowie einige zusätzliche Verbraucher. Der Luftdruck der Systeme liegt meist oberhalb von 10 bar. Bei den bekannten Systemen wird die Druckluft dieser Druckluftsysteme der Nutzfahrzeuge ebenfalls genutzt für das Zerstäuben, bzw. Eindüsen des Harnstoffes mittels der bekannten Dosiersysteme.

Nachteilig ist dabei jedoch, dass durch den kontinuierlichen Luftverbrauch des Dosiersystems ein höherer Kraftstoffverbrauch des Motors die Folge ist. Ebenfalls nachteilig ist, dass die Luftversorgung an den zusätzlichen Verbrauchern in Form des Harnstoffdosiersystems angepasst werden muss. Besonders nachteilig ist dabei, dass vielfach Kompressoren mit erhöhter Leistung erforderlich werden.

Vorzugsweise wird bei dem erfindungsgemäßen Dosiersystem zur Injektion oder Eindüsung einer Harnstofflösung in den Abgasstrom der Luftdruck der Druckluftversorgung überwacht und entsprechend den Anforderungen geregelt. Besonders vorteilhaft bei dem Verfahren zur Steuerung der Eindüsung einer Harnstofflösung mittels Druckluft in den Abgasstrom eines Verbrennungsmotors zur selektiven katalytischen Reduktion ist es, dass die zur Zerstäubung der Harnstofflösung zugeführte Druckluftmenge in jedem Betriebspunkt in Abhängigkeit der Betriebsparameter Abgastemperatur und Abgasmassenstrom gesteuert und auf die jeweils erforderliche Mindestluftmenge abgesenkt wird, so dass die Tröpfchenqualität der eingedüsten Harnstofflösung für die Wirkung des Katalysators ausreicht.

Die Druckluft wird somit bei dem erfindungsgemäßen Dosiersystem und dem Verfahren zur Steuerung der Eindüsung der Harnstofflösung geregelt über ein entsprechendes Regelventil zugeführt. Die zugeführte Luftmenge wird in jedem Betriebspunkt soweit angesenkt, dass die Tröpfchenqualität für die Wirkung des Katalysators gerade noch ausreichend ist. Dies erfolgt durch die Anpassung der Dosierluftmenge in jedem Betriebspunkt des Motors in Abhängigkeit der Betriebsparameter. Als Betriebsparameter werden dabei insbesondere die Abgastemperatur und / oder der Abgasmassenstrom erfasst und der Regelung der Luftmenge zugeführt, d.h. dass die Luftmenge in Abhängigkeit der aktuellen Motorbetriebspunkte jeweils nachgeführt wird.

Eine Verminderung der Luftmenge in der Düse bedeutet eine Verschlechterung der Tröpfchenqualität, d.h. größere Tröpfchendurchmesser. Die minimal erforderliche Tröpfchenqualität ist abhängig von dem in dem jeweiligen Betriebspunkt geforderten Katalysatorwirkungsgrad. Die Druckluftmenge wird der jeweiligen Anforderung entsprechend auf das erforderliche Minimum abgesenkt. Hierdurch wird der Verbrauch des Motors bei Kraftfahrzeugen spürbar abgesenkt. Vorzugsweise handelt es sich bei dem Luftventil um ein Proportionalregelventil. Durch die Verwendung eines Proportionalregelventiles ist es möglich, die Luftmenge der Druckluftversorgung, d.h. die Luftmenge die zur Eindüsung der Harnstofflösung in den Abgasstrom zugeführt wird, exakt zu regeln. Vorzugsweise handelt es sich bei dem Sensor, der zwischen dem Luftventil und der Düse angeordnet ist, um einen Drucksensor, mittels dessen der Druck in dem Druckluftsystem hinter dem Luftventil überwacht wird.

In einer besonders bevorzugten Ausführungsform erhält das Dosiersystem ein Signal des Abgasmassenstromes aus der Motorsteuerung. Der Abgasmassenstrom wird von dem Motorsteuergerät aus angesaugtem Luftmassenstrom und Kraftstoffmassenstrom berechnet und als Signal des Abgasmassenstromes bereitgestellt. Alternativ weist das Dosiersystem einen Sensor zur Messung des Abgasmassenstromes auf. Vorzugsweise weist das Dosiersystem alternativ oder kumulativ einen Sensor zur Messung der Abgastemperatur auf.

Aus dem Abgasmassenstromsignal und / oder der Abgastemperatur ist es möglich, die in Abhängigkeit des jeweiligen Motorbetriebspunktes vorliegenden Betriebsparameter Abgastemperatur und / oder Abgasmassenstrom zu erfassen und über eine entsprechende Steuerelektronik des Dosiersystems auszuwerten und den Druck und / oder die Luftmenge und / oder die Ventilöffnungszeiten der Druckluftversorgung in Abhängigkeit der gemessenen Betriebsparameter zu regeln.

Die Einflussparameter für die Anpassung der Dosierung der Luftmenge sind insbesondere:
- Abgastemperatur
- Abgasmassenstrom
- Harnstoffmassenstrom
- Erforderlicher Katalysatorwirkungsgrad
- Katalysatorgröße
- Aufbereitungsstrecke zwischen Harnstoffeindosierung und Katalysator

Es ist mit dem erfindungsgemäßen Dosiersystem somit möglich, in jedem einzelnen Betriebspunkt abhängig von den jeweiligen Randbedingungen die Luftmenge zu optimieren.

In einer besonders bevorzugten Ausführungsform weist die Druckluftversorgung ein Drosselventil auf. Durch die Anordnung eines Drosselventils ist es möglich, den Luftdruck in dem Luftdrucksystem vor der Zuführung zur Düse entsprechend abzusenken.

In einer besonders bevorzugten Ausführungsform weist das Dosiersystem eine Dosierpumpe zur Förderung der Harnstofflösung auf. Insbesondere kann es sich bei einer solchen Dosierpumpe um eine steuerbare Dosierpumpe hinsichtlich des geförderten Massenstromes an Harnstofflösung handeln, so dass die Fördermenge an Harnstofflösung dem jeweiligen Betriebspunkt durch eine entsprechende Ansteuerung der Dosierpumpe anpassbar ist.

Vorzugsweise ist zwischen der Harnstoffleitung und einer Leitung der Druckluftversorgung eine Verbindungsleitung angeordnet, wobei die Verbindungsleitung ein Rückschlagventil aufweist.

Um in Dosierpausen die Luftzufuhr vollständig zu unterbrechen, ist es erforderlich, den Harnstoff aus den heißen Bereichen zu entfernen, um zu vermeiden, dass sich Ablagerungen bilden. Andernfalls würde der Harnstoff sich bei hohen Temperaturen zersetzen und zu Ablagerungen und somit zu Verstopfungen führen. Durch die Anordnung einer Druckluftleitung, d.h. einer Verbindungsleitung zwischen einer Harnstoffleitung und einer Leitung der Druckluftversorgung, können derartige Ablagerungen verhindert werden, indem die Harnstoffleitung in Dosierpausen mittels Druckluft freigeblasen wird. In diese Verbindungsleitung wird ein Rückschlagventil eingesetzt, dessen Öffnungsdruck oberhalb des sich bei der Dosierung einstellenden Luftdrucks nach dem Luftventil ist.

Im Dosierbetrieb ist dieses Rückschlagventil geschlossen, da der Druck in der Druckluftleitung unterhalb des Öffnungsdruckes des Rückschlagventils liegt. Um die Harnstoffleitung mit Druckluft freizublasen, wird die Harnstoffförderung durch die Dosierpumpe abgestellt und das Luftventil kurzzeitig soweit geöffnet, dass sich der Druck über den Öffnungsdruck des Rückschlagventils erhöht. In Folge der Drossel in der Druckluftleitung ergibt sich ein Druckgefälle in der Dosierleitung und die Druckluft treibt den Harnstoff in das Abgassystem. Die Leitung wird somit freigeblasen. Nach einem kurzzeitigen Luftstoß ist der Harnstoff aus der Dosierdüse ausgeblasen und die Luftzufuhr kann komplett abgeschaltet werden.

Vorzugsweise weist das Dosiersystem einen Druckluftkompressor auf. Mittels eines derartigen Druckluftkompressors ist es möglich, die für das Dosiersystem geforderte Druckluft bereitzustellen, sofern in der Installationsumgebung des Dosiersystems keine oder eine nicht ausreichende Druckluftversorgung vorhanden ist.

Vorzugsweise weist das Dosiersystem ein Steuergerät auf, mittels dessen das Luftventil und / oder ein Drosselventil und / oder eine Dosierpumpe und / oder ein Druckluftkompressor in Anhängigkeit der von dem Sensor oder den Sensoren erfassten Messwerten steuerbar ist.

Durch die Anordnung eines derartigen Steuergerätes, welches eine oder mehrere Komponenten des Dosiersystems in Abhängigkeit der Sensormesswerte, d.h. in Abhängigkeit der aktuellen Betriebsparameter, steuert, ist eine Optimierung des Betriebs des Dosiersystems, d.h. eine Luftoptimierung in besonders vorteilhafter Weise realisierbar. Es ist mittels eines derartigen Steuergerätes somit möglich, die Harnstofffördermenge und die Luftfördermenge in optimaler Weise den aktuellen Betriebsparametern des Verbrennungsmotors und des Katalysators zur selektiv katalytischen Reduktion anzupassen und somit zu regeln.

Vorzugsweise weist das Dosiersystem einen Harnstofflösungstank auf. Dadurch, dass das Dosiersystem selbst einen Harnstofflösungstank aufweist, ist es möglich, das Dosiersystem in entsprechenden Umgebungen nachzurüsten, in denen ein Harnstofflösungstank nicht bereits vorhanden ist.
In einer bevorzugten Ausführungsform weist das Dosiersystem eine Zweistoffdüse auf. Besonders bevorzugt handelt es sich bei der Zweistoffdüse um eine außenmischende Düse.

Das erfindungsgemäße Verfahren zur Steuerung der Eindüsung oder Injektion einer Harnstofflösung mittel Druckluft in dem Abgasstrom eines Verbrennungsmotors zur selektiven katalytischen Reduktion, ist vorzugsweise derart ausgestaltet, dass bei Unterbrechung oder Beendigung der Eindüsung von Harnstofflösung die harnstofflösungführenden Leitungen mittels Druckluft von der Harnstofflösung gereinigt werden.

Das Verfahren ist also vorzugsweise derart ausgestaltet, dass eine Beendigung oder Unterbrechung der Förderung von Harnstofflösung zeitlich vor der Beendigung oder Unterbrechung der Druckluftförderung erfolgt und die Druckluft nach Unterbrechung oder Beendigung der Förderung der Harnstofflösung dazu genutzt wird, die Harnstofflösung führenden Teile mittels der Druckluft zu reinigen. Hierdurch wird der Harnstoff insbesondere aus den heißen Bereichen des Dosiersystems entfernt. Anderenfalls würde der Harnstoff sich bei hohen Temperaturen zersetzen und Ablagerungen bilden und könnte zu Verstopfungen führen.

Um die Harnstoffleitung mit Druckluft freizublasen, wird die Harnstoffförderung durch die Dosierpumpe abgestellt und das Luftregelventil kurzzeitig soweit geöffnet, dass sich der Druck über den Öffnungsdruck eines Rückschlagventils in einer Verbindungsleitung zwischen Harnstoffleitung und Druckluftleitung erhöht. In Folge dessen entsteht ein Druckgefälle in der Dosierleitung, so dass die Druckluft den Harnstoff in das Abgassystem treibt und somit die harnstoffführende Leitung freigeblasen wird. Nach einem kurzzeitigen Luftstoß ist der Harnstoff aus der Dosierdüse ausgeblasen und die Luftzufuhr kann ebenfalls komplett abgeschaltet werden.

Eine Unterbrechung oder Beendigung der Eindüsung von Harnstofflösung kann somit durch Abschaltung einer Dosierpumpe erfolgen.

Vor dem Wiedereinschalten der Dosierung ist es sinnvoll, zunächst die Druckluft auf einen Wert einzustellen, der oberhalb der normalen Dosierluftzufuhr ist, um die Düse abzukühlen, bevor der Harnstoff in diese eintritt.

Das Ausblasen des Harnstoffs aus den Leitungen ist ebenfalls vorteilhaft, wenn das Gesamtsystem abgeschaltet wird. Harnstoff friert bei Temperaturen unterhalb von -11 °Celsius ein. Hierbei dehnt sich die Harnstoffwasserlösung um etwa 10% aus. Dies führt zu einem Frostdruck, durch den Komponenten zerstört werden könnten. Daher ist es erforderlich, den Harnstoff aus der Düse auszublasen, bevor das System komplett abgeschaltet wird.

Dies kann insbesondere dadurch erfolgen, dass nach der Beendigung der Harnstoffförderung das Gesamtsystem mittels Druckluft gereinigt wird, d.h. dass der Harnstoff aus dem System mittels Druckluft ausgeblasen wird.

Vorzugsweise erfolgt eine Ansteuerung zumindest einer Dosierpumpe und / oder zumindest eines Druckluftkompressors und / oder zumindest eines Luftregelventils in Abhängigkeit der Betriebsparameter Abgastemperatur und Abgasmassenstrom bei dem erfindungsgemäßen Verfahren zur Steuerung der Eindüsung oder Injektion der Harnstofflösung. Hierzu können mittels eines entsprechenden Steuergerätes die verschieden erfassten Betriebsparameter ausgewertet werden, so dass eine Ansteuerung der Komponenten exakt erfolgen kann.

In den Figuren ist eine schematische Darstellung eines Dosiersystems zur Eindüsung einer Harnstofflösung in den Abgasstrom eines Verbrennungsmotors sowie ein Ausführungsbeispiel eines erfindungsgemäßen Komponententrägers dargestellt und werden nachfolgend erläutert.

Es zeigen:
- Figur 1: ein Anlagenschema einer Ausführungsform eines Dosiersystems;
- Figur 2: eine Ausführungsform eines erfindungsgemäßen Komponententrägers.

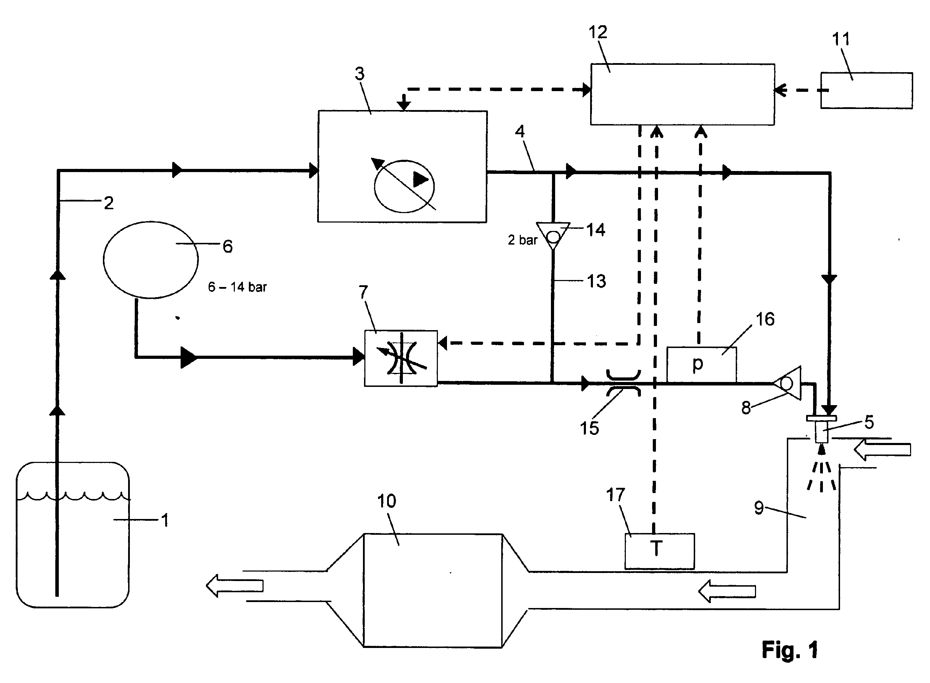

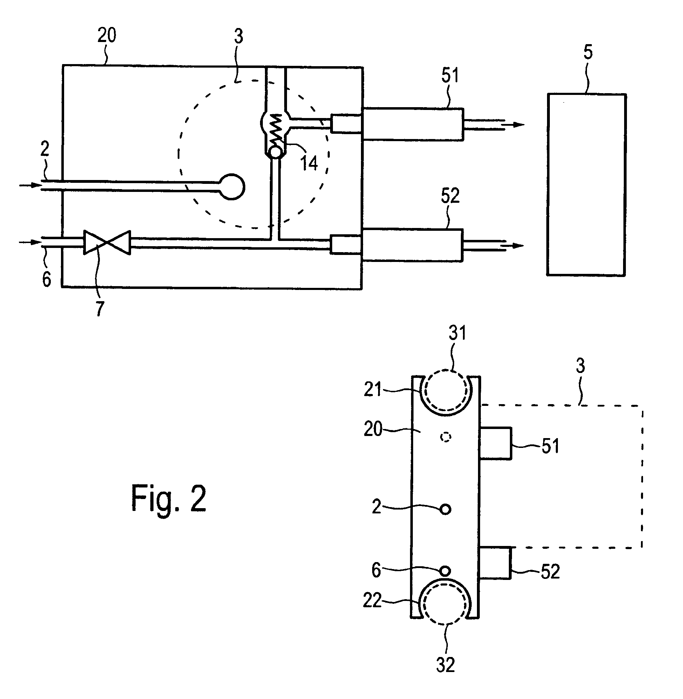

In den Figuren sind mit identischen Bezugszeichen identische Bauteile und Baugruppen bezeichnet. Figur 1 zeigt schematisch ein Harnstoffdosiersystem. Figur 2 zeigt eine Ausführungsform eines erfindungsgemäßen Komponententrägers in einer Draufsicht (oben) sowie in einer um 90° gedrehten Seitenansicht (unten).

Harnstoff wird aus einem Tank 1 über eine Saugleitung 2 von der Dosierpumpe 3 angesaugt. Die Dosierpumpe 3 ist beispielsweise eine Membranpumpe oder eine Kolbenpumpe, die mit jedem Hub eine definierte Menge an Harnstofflösung fördert und somit gleichermaßen dosiert. Über eine Druckleitung 4 wird der Harnstoff zu einer Zweistoffdüse 5 geleitet. Die Zweistoffdüse 5 ist vorzugsweise eine außenmischende Düse, bei der ein Luftstrahl den Harnstoff zerstäubt.

Druckluft wird aus einem Druckluftbehälter 6 zu einem Proportionalluftventil 7 geleitet. Das Proportionalluftventil 7 stellt den Druckstrom ab auf einen durch die Elektronik 12 vorgegeben Wert ein. Eingangsgrößen für die Berechnung dieses Wertes mittels der elektronischen Steuereinheit 12 sind Motordaten wie der Abgasmassenstrom, die von der Motorelektronik übergeben werden. Weiterhin die Abgastemperatur, sowie der Druck der Druckluft vor der der Zweistoffdüse 5. Der Druck vor der Zweistoffdüse 5 ist ein Maß für den durchgesetzten Luftvolumenstrom. Die Luft wird über eine Druckluftleitung und ein Rückschlagventil 8 zu der Zweistoffdüse 5 geleitet. Der Harnstoff wird in der Zweistoffdüse 5 von der Druckluft zerstäubt und dem Abgasstrom 9 zugeführt.

Zur Erfassung der Betriebsparameter Abgasmassenstrom, Luftdruck und Abgastemperatur sind angeordnet ein Sensor 11 zur Erfassung des Abgasmassenstromes, ein Drucksensor 16 zur Erfassung des Druckes der Druckluft vor der Zweistoffdüse 5, sowie ein Temperatursensor 17 zur Erfassung der Abgastemperatur im Abgasstrom 9. In einer nicht dargstellten Alternative wird ein Abgasmassenstromsignal von der Motorsteuerung bereitgestellt.

Die Messwerte der Sensoren 11, 16, 17 werden der Steuereinheit 12 zugeführt. In der Steuereinheit 12 werden die erfassten Sensordaten und Motordaten ausgewertet und es erfolgt eine Ansteuerung des Proportionalluftventils 7 und der Dosierpumpe 3 in Abhängigkeit der momentanen Betriebsdaten. Die Düsenspitze der Zweistoffdüse 5 ist im Abgasstrom 9 angeordnet. Der Harnstoff wird über die Abgasleitung zum SCR- Katalysator 10 geleitet. Hierbei verdampft ein großer Teil der Flüssigkeitströpfchen. Der Harnstoff wandelt sich in Ammoniak um. Im Katalysator 10 selbst wird mit dem Ammoniak die Stickoxydemission des Motors reduziert.

Das Rückschlagventil 8 in der Druckleitung zwischen Proportionalluftventil 7 und der Zweistoffdüse 5 verhindert, das bei eventuellen Verstopfungen der Düse 5 der Harnstoff in die Druckluftleitungen gedrückt werden kann.

Die Druckluftleitung ist nach dem Proportionalluftventil 7 mit der Harnstoffleitung 4 über ein federbelastetes Rückschlagventil 14 mit der Leitung 13 verbunden. In die Druckluftleitung nach Proportionaldruckluftventil 7 und nach dem Abzweig der Leitung 13 ist weiterhin eine Strömungsdrossel 15 eingebaut. Hierdurch ist es ohne zusätzliche aktiv betätigte Bauteile möglich, den Harnstoff mit der Druckluft aus der Druckleitung und der Düse auszutreiben, um in Dosierpausen den Harnstoff aus den heißen Bereichen zu entfernen, um zu verhindern, dass sich der Harnstoff bei hohen Temperaturen zersetzt und Ablagerungen bildet.

Die Funktion der Strömungsdrossel 15 kann einfachstenfalls die Leitung selber übernehmen, wenn diese eine ausreichende Länge hat. Während des Dosierbetriebs liegt der Druck in der Leitung von Drossel 15 unterhalb des Öffnungsdrucks des federbelasteten Rückschlagventils 14. Die Druckluft strömt durch die Düse 5. Hierbei wird der zudosierte Harnstoff zerstäubt. Wird bei ausgeschalteter Dosierpumpe 3 der Druck nach Proportionaldruckventil 7 auf einen Wert oberhalb des Öffnungsdrucks des Rückschlagventils 14 angehoben, so strömt Luft in die Druckleitung 4 des Harnstoffs. Der Harnstoff in Leitung 4 und Düse 5 wird ausgetrieben. Hiermit ist der Bereich der Düse 5 nach Ausstellen des Motors harnstofffrei und somit frostbeständig. Im Betrieb des Motors bei hohen Abgastemperaturen ohne Dosierung können sich keine Ablagerungen bilden.

Die Pumpe 3, das Proportionalluftventil 7 und das Rückschlagventil 14 des Dosiersystems gemäß Figur 1 sind wie in Figur 2 dargestellt auf dem Komponententräger 20 angeordnet. In den Komponententräger 20 sind integriert einerseits Anschlüsse für die Harnstoffleitung 2 und die Druckluftleitung 6, auf der anderen Seite die Anschlüsse 51, 52 zur Düse 5, sowie innerhalb des Komponententrägers 20 die entsprechenden Leitungen selbst. Über den Anschluss 51 wird der Düse 5 die von der Pumpe 3 geförderte und aufgeheizte Harnstofflösung zugeleitet. Über den Anschluss 52 wird der Düse 5 Druckluft zugeleitet.

Zwischen Druckseite der Pumpe 3 und der Druckluftversorgung ist das federbelastete Rückschlagventil 14 angeordnet.

Der Komponententräger 20 ist gebildet durch eine massive Kunststoffplatte, die vollständig von einem wärmeleitenden Aluminiumblech umhüllt ist. Die Platte weist entlang ihrer Längskanten Ausnehmungen 21, 22 auf. Die wärmeleitende Aluminiumumhüllung umgibt den Komponententräger 20 vollständig inklusive der Ausnehmungen 21, 22. In diese Ausnehmungen 21, 22 sind Kühlmittelschläuche 31, 32 des Verbrennungsmotors eingeclipst. Der Komponententräger 20 bildet somit eine Wärmesenke innerhalb des Kühlkreislaufes des Verbrennungsmotors. Über die auf diesem Wege von den Kühlwasserschläuchen 31, 32 über die Kontaktbereiche 21, 22 auf den Komponententräger 20 übertragene Wärme erfolgt die Beheizung der Komponenten, d.h. der Pumpe 3, der Ventile 7, 14 und der Anschlussbereiche 51, 52 des Dosiersystems, die an/auf dem Komponententräger 20 angeordnet sind.

Durch die Anordnung des erfindungsgemäßen Komponententrägers 20 wird der Montageaufwand des Dosiersystems reduziert. Es entfallen verschiedene Anschlüsse und Leitungen, da diese in den Komponententräger 20 integriert sind. Gleichzeitig wird das System betriebssicherer durch weniger mögliche Leckagestellen wie Schlauchverbindungen und Schlauchanschlüsse. Es würden Kräfte auf diese Schlauchverbindungen und Schlauchanschlüsse bei einem diskreten Aufbau des Systems durch unterschiedliche Schwingungen/Bewegungen der Komponenten zueinander wirken. Diese Schwingungen/Bewegungen der Komponenten zueinander werden jedoch durch die Anordnung der Komponenten an bzw. auf dem Komponententräger vermieden.

Die Integration des Rückschlagventils 14 in die Adapterplatte 20 erfolgt in einer Position, in der die Feder des Rückschlagventils 14 beim Dosieren ständig mit frischem Harnstoff umspült wird. Nach dem Abstellen der Dosierung und dem darauffolgenden Lüften durch das Rückschlagventil 14 kann die bereits mit Harnstoff befeuchtete Feder durch Auskristallisieren des Harnstoffes "verbackenlverkleben" (z.B. über Nacht). Durch diese Umspülung durch die spezielle Positionierung des Rückschlagventils 14 wird beim nächsten Dosieren der getrocknete Harnstoff wieder gelöst und zur Düse 5 abtransportiert. Somit ist das Rückschlagventil 14 nach kurzer Dosierzeit wieder einsatzfähig.

Es erfolgt ein einfaches Beheizen der Komponenten und deren Verbindungen untereinander. Der Komponententräger 20 wird an den Seiten derart gestaltet, dass Schläuche 31, 32 in einer runden Nut 21, 22 eingelegt werden können. Diese Schläuche 31, 32 werden mit Kühlwasser vom Fahrzeug versorgt. Durch ein Abdeckblech/-gehäuse könnten die Schläuche 31, 32 in den Nuten 21, 22 formschlüssig angedrückt werden und die Komponenten des Dosiersystems werden gegen Verschmutzung und Krafteinwirkung von außen geschützt. Durch den Komponententräger 20 werden alle darauf befindlichen Komponenten 3, 7, 14 und Verbindungsbohrungen geheizt. Gleichzeitig wird aber auch überschüssige Abwärme der Dosierpumpe 3 an den Komponententräger 20 abgegeben. Bei der Komponente Proportionalventil 14 kann eine Vereisung durch feuchte Luft infolge einer Druckentspannung ebenfalls nicht mehr entstehen.

## Patentansprüche

1. Komponententräger (20) eines Dosiersystems zur Eindüsung einer Harnstofflösung in den Abgasstrom (9) eines Verbrennungsmotors zur selektiven katalytischen Reduktion, wobei das Dosiersystem mit einem Harnstofflösungstank (1) verbunden ist, aus dem Harnstofflösung entnehmbar ist, und wobei das Dosiersystem mit einer Druckluftversorgung (6) verbunden ist, wobei das Dosiersystem eine Pumpe (3) zur Förderung der Harnstofflösung aufweist und wobei das Dosiersystem zumindest eine Düse (5) aufweist, durch die mittels Druckluft die Harnstofflösung in den Abgasstrom (9) einspritzbar ist, **dadurch gekennzeichnet, dass** Komponenten (2, 3, 7, 13, 14, 51, 52) des Dosiersystems in thermischem Kontakt zu dem Komponententräger (20) an dem Komponententräger (20) montiert sind und der Komponententräger (20) zumindest einen Kontaktbereich (21, 22) zur Herstellung eines thermischen Kontaktes zu einem Fluid mit höherer Temperatur aufweist, insbesondere zum Kühlmittelkreislauf des Verbrennungsmotors, sodass der Komponententräger (20) eine Wärmesenke bildet und erwärmt wird, sodass eine Erwärmung der auf dem Komponententräger (20) montierten Komponenten (2, 3, 7, 13, 14, 51, 52) erfolgt, wobei die Pumpe (3) in thermischem Kontakt zu dem Komponententräger (20) an dem Komponententräger (20) montiert ist.

2. Komponententräger (20) nach Anspruch 1, **dadurch gekennzeichnet, dass** es sich bei den an dem Komponententräger (20) montierten Komponenten (2, 3, 7, 13, 14, 51, 52) ferner um eine Harnstofflösungsleitung (2) und/oder eine Druckluftleitung (6) und/oder Ventile (7, 14) und/oder Anschlüsse (51, 52) handelt.

3. Komponententräger (20) nach Anspruch 1 oder 2, **dadurch gekennzeichnet, dass** der Kontaktbereich (21, 22) durch zumindest eine Ausnehmung und/oder Aufnahme gebildet ist, in die eine den Komponententräger (20) erwärmende Leitung eingelegt ist, wobei die Leitung ein Fluid mit erhöhter Temperatur führt, sodass der Komponententräger (20) eine Wärmesenke bildet.

4. Komponententräger (20) nach einem der vorherigen Ansprüche, **dadurch gekennzeichnet, dass** der Komponententräger (20) mehrere außenseitig angeordnete Nuten (21, 22) und/oder Aufnahmen aufweist, in die Leitungen (31, 32) eingelegt sind, die ein Fluid mit erhöhter Temperatur führen.

5. Komponententräger (20) nach einem der vorherigen Ansprüche, **dadurch gekennzeichnet, dass** der Komponententräger (20) aus einem Metall oder einer Legierung besteht, welches gute Wärmeleitungseigenschaften aufweist, und/oder dass der Komponententräger (20) aus einer Grundplatte gebildet ist, insbesondere einer Kunststoffplatte, die eine wärmeleitende Beschichtung aufweist, insbesondere von einem Aluminiumblech umhüllt ist.

6. Komponententräger (20) nach einem der vorherigen Ansprüche, **dadurch gekennzeichnet, dass** der Komponententräger (20) durch eine Metallplatte gebildet ist, die eine Längserstreckung aufweist, wobei die Nut/Nuten (21, 22) und/oder Aufnahme/Aufnahmen längs der Platte verläuft/verlaufen, sodass ein großer Kontaktbereich gebildet wird.

7. Komponententräger (20) nach einem der vorherigen Ansprüche, **dadurch gekennzeichnet, dass** es sich bei der Leitung/den Leitungen (31, 32) um Kühlmittelleitungen und/oder Kühlmittelschläuche des Verbrennungsmotors handelt.

8. Komponententräger (20) nach einem der vorherigen Ansprüche, **dadurch gekennzeichnet, dass** der Komponententräger (20) zumindest im Bereich der Kontaktbereiche, insbesondere der Nut/Nuten (21, 22) und/oder Aufnahme/Aufnahmen, einen hohen Wärmeübergangskoeffizienten aufweist.

9. Komponententräger (20) nach einem der vorherigen Ansprüche, **dadurch gekennzeichnet, dass** der Komponententräger (20) zumindest im Bereich der Kontaktbereiche, insbesondere Nut/Nuten (21, 22) und/oder Aufnahme/Aufnahmen eine hohe Wärmeleitfähigkeit aufweist.

10. Komponententräger (20) nach einem der vorherigen Ansprüche, **dadurch gekennzeichnet, dass** die Leitungen (31, 32) in Nuten (21, 22) und/oder in Aufnahmen eingeclipst sind.

11. Komponententräger (20) nach einem der vorherigen Ansprüche, **dadurch gekennzeichnet, dass** der Komponententräger (20) Montageelemente aufweist, insbesondere schwalbenschwanzförmige Elemente, mittels derer er in entsprechenden Aufnahmen montierbar ist, insbesondere Montageelemente aus einem dämpfenden Werkstoff, insbesondere Gummi.

12. Dosiersystem zur Eindüsung einer Harnstofflösung in den Abgasstrom (9) eines Verbrennungsmotors zur selektiven katalytischen Reduktion, wobei das Dosiersystem mit einem Harnstofflösungstank (1) verbunden ist, aus dem Harnstofflösung entnehmbar ist, und wobei das Dosiersystem mit einer Druckluftversorgung (6) verbunden ist, wobei das Dosiersystem eine Pumpe (3) zur Förderung der Harnstofflösung aufweist und wobei das Dosiersystem zumindest eine Düse (5) aufweist, durch die mittels Druckluft die Harnstofflösung in den Abgasstrom (9) einspritzbar ist, **dadurch gekennzeichnet, dass** das Dosiersystem einen Komponententräger (20) nach einem der vorherigen Ansprüche aufweist, wobei die Pumpe des Dosiersystems in thermischem Kontakt zu dem Komponententräger (20) auf dem Komponententräger (20) montiert ist, wobei der Komponententräger (20) in thermischem Kontakt zu einem Kühlmittelkreislauf des Verbrennungsmotors steht.

13. Dosiersystem nach Anspruch 12, **dadurch gekennzeichnet, dass** eine Harnstofflösungsleitung und/oder eine Druckluftleitung (6) und/oder Ventile (7, 14) und/oder Anschlüsse (51, 52), in thermischem Kontakt zu dem Komponententräger (20) auf dem Komponententräger (20) montiert sind.

## Claims

1. Component carrier (20) of a dosing system for injecting a urea solution into the exhaust gas flow (9) of an internal combustion engine for selective catalytic reduction, the dosing system being connected to a urea tank (1) from which urea solution can be taken, and the dosing system being connected to a compressed air supply (6), the dosing system having a pump (3) for delivering the urea solution and the dosing system having at least one nozzle (5) through which the urea solution can be injected into the exhaust gas flow (9) by means of compressed air, **characterised in that** the components (2, 3, 7, 13, 14, 51, 52) of the dosing system are mounted in thermal contact with the component carrier (20) on the component carrier (20), and the component carrier (20) has at least one contact region (21, 22) for producing thermal contact with a fluid having a higher temperature, particularly with the coolant circuit of the internal combustion engine so that the component carrier (20) forms a heat sink and is heated so that the components (2, 3, 7, 13, 14, 51, 52) which are mounted on the component carrier (20) are heated, the pump (3) being mounted in thermal contact with the component carrier (20) on the component carrier (20).

2. Component carrier (20) according to claim 1, **characterised in that** the components (2, 3, 7, 13, 14, 51, 52) which are mounted on the component carrier (20) moreover are a urea solution line (2) and/or a compressed air line (6) and/or valves (7,14) and/or ports (51, 52).

3. Component carrier (20) according to either claim 1 or claim 2, **characterised in that** the contact region (21, 22) is formed by at least one recess and/or receiver into which a line heating the component carrier (20) is inserted, the line carrying a fluid at elevated temperature so that the component carrier (20) forms a heat sink.

4. Component carrier (20) according to any of the preceding claims, **characterised in that** the component carrier (20) has a plurality of grooves (21, 22) and/or receivers which are located on the outside and into which lines (31, 32) are inserted which carry a fluid at elevated temperature.

5. Component carrier (20) according to any of the preceding claims, **characterised in that** the component carrier (20) consists of a metal or an alloy which has good heat conduction properties, and/or **in that** the component carrier (20) is formed from a base plate, particularly a plastic plate, which has a heat-conducting coating, in particular is jacketed by an aluminium sheet.

6. Component carrier (20) according to any of the preceding claims, **characterised in that** the component carrier (20) is formed by a metal plate which has a lengthwise extension, the groove/grooves (21, 22) and/or receiver/receivers running along the plate so that a large contact region is formed.

7. Component carrier (20) according to any of the preceding claims, **characterised in that** the line/lines (31, 32) are coolant lines and/or coolant hoses of the internal combustion engine.

8. Component carrier (20) according to any of the preceding claims, **characterised in that** the component carrier (20) has a high coefficient of heat transfer at least in the region of the contact regions, particularly of the groove/grooves (21, 22) and/or receiver/receivers.

9. Component carrier (20) according to any of the preceding claims, **characterised in that** the component carrier (20) has high thermal conductivity at least in the region of the contact regions, particularly of the groove/grooves (21, 22) and/or receiver/receivers.

10. Component carrier (20) according to any of the preceding claims, **characterised in that** the lines (31, 32) are clipped into grooves (21, 22) and/or into receivers.

11. Component carrier (20) according to any of the preceding claims, **characterised in that** the component carrier (20) has mounting elements, particularly dovetail-shaped elements, by means of which it can be mounted in corresponding receivers, in particular mounting elements made of a damping material, particularly rubber.

12. Dosing system for injecting a urea solution in to the exhaust gas flow (9) of an internal combustion engine for selective catalytic reduction, the dosing system being connected to a urea tank (1) from which urea solution can be taken, and the dosing system being connected to a compressed air supply (6), the dosing system having a pump (3) for delivering the urea solution and the dosing system having at least one nozzle (5) through which the urea solution can be injected into the exhaust gas flow (9) by means of compressed air, **characterised in that** the dosing system has a component carrier (20) according to any of the preceding claims, the pump of the dosing system being mounted in thermal contact with the component carrier (20) on the component carrier (20), the component carrier (20) being in thermal contact with a coolant circuit of the internal combustion engine.

13. Dosing system according to claim 12, **characterised in that** a urea solution line and/or a compressed air line (6) and/or valves (7, 14) and/or ports (51, 52) are mounted in thermal contact with the component carrier (20) on the component carrier (20).

## Revendications

1. Support de composants (20) d'un système de dosage pour injecter une solution d'urée dans le courant de gaz d'échappement (9) d'un moteur à combustion interne à des fins de réduction catalytique sélective, dans lequel le système de dosage est raccordé à un réservoir de solution d'urée (1) duquel on peut prélever une solution d'urée, et dans lequel le système de dosage est raccordé à une source d'air comprimé (6), dans lequel le système de dosage présente une pompe (3) pour acheminer la solution d'urée et dans lequel le système de dosage présente au moins une buse (5), par laquelle la solution d'urée peut être injectée dans le courant de gaz d'échappement (9) au moyen d'air comprimé, **caractérisé en ce que** les composants (2, 3, 7, 13, 14, 51, 52) du système de dosage sont montés, en contact thermique avec le support de composants (20), sur le support de composants (20) et le support de composants (20) présente au moins une zone de contact (21, 22) pour établir un contact thermique avec un fluide à température élevée, en particulier avec le circuit de réfrigérant du moteur à combustion interne, de sorte que le support de composants (20) forme un puits de chaleur et soit chauffé afin qu'il se produise un réchauffement des composants (2, 3, 7, 13, 14, 51, 52) montés sur le support de composants (20), dans lequel la pompe (3) est montée, en contact thermique avec le support de composants (20), sur le support de composants (20).

2. Support de composants (20) selon la revendication 1, **caractérisé en ce que** les composants (2, 3, 7, 13, 14, 51, 52) montés sur le support de composants (20) sont par ailleurs formés d'une conduite de solution d'urée (2) et/ou d'une conduite d'air comprimé (6) et/ou de soupapes (7, 14) et/ou de raccords (51, 52).

3. Support de composants (20) selon la revendication 1 ou la revendication 2, **caractérisé en ce que** la zone de contact (21, 22) est formée par au moins un évidement et/ou un logement, dans lequel ou lesquels est installée une conduite chauffant le support de composants (20), dans lequel la conduite achemine un fluide à température élevée de sorte que le support de composants (20) forme un puits de chaleur.

4. Support de composants (20) selon l'une quelconque des revendications précédentes, **caractérisé en ce que** le support de composants (20) présente plusieurs rainures (21, 22) et/ou logements aménagés côté extérieur, dans lesquels sont installées des conduites (31, 32), qui acheminent un fluide à température élevée.

5. Support de composants (20) selon l'une quelconque des revendications précédentes, **caractérisé en ce que** le support de composants (20) est constitué d'un métal ou d'un alliage, qui présente de bonnes propriétés de conduction thermique, et/ou le support de composants (20) est formé d'une plaque de base, en particulier d'une plaque de matière plastique, qui présente un revêtement thermoconducteur, en particulier qui est enveloppé d'une tôle d'aluminium.

6. Support de composants (20) selon l'une quelconque des revendications précédentes, **caractérisé en ce que** le support de composants (20) est formé par une plaque métallique, qui présente une extension longitudinale, dans lequel la ou les rainures (21, 22) et/ou le ou les logements s'étend ou s'étendent le long de la plaque de sorte que soit formée une plus grande zone de contact.

7. Support de composants (20) selon l'une quelconque des revendications précédentes, **caractérisé en ce que** la ou les conduites (31, 32) est ou sont constituées de conduites d'agent réfrigérant et/ou de tuyaux d'agent réfrigérant du moteur à combustion interne.

8. Support de composants (20) selon l'une quelconque des revendications précédentes, **caractérisé en ce que** le support de composants (20) présente, au moins dans la zone des zones de contact, en particulier dans la zone de la rainure ou des rainures (21, 22) et/ou du logement ou des logements, un coefficient de transmission de chaleur élevé.

9. Support de composants (20) selon l'une quelconque des revendications précédentes, **caractérisé en ce que** le support de composants (20) présente, au moins dans la zone des zones de contact, en particulier dans la zone de la rainure ou des rainures (21, 22) et/ou du logement ou des logements, une conductibilité thermique élevée.

10. Support de composants (20) selon l'une quelconque des revendications précédentes, **caractérisé en ce que** les conduites (31, 32) sont clipsées dans les rainures (21, 22) et/ou dans les logements.

11. Support de composants (20) selon l'une quelconque des revendications précédentes, **caractérisé en ce que** le support de composants (20) présente des éléments de montage, en particulier des éléments en forme de queue d'aronde, au moyen desquels il peut être monté dans des logements correspondants, en particulier des éléments de montage formés d'un matériau d'amortissement, tout particulièrement du caoutchouc.

12. Système de dosage pour injecter une solution d'urée dans le courant de gaz d'échappement (9) d'un moteur à combustion interne afin d'effectuer une réduction catalytique sélective, dans lequel le système de dosage est raccordé à un réservoir de solution d'urée (1), d'où une solution d'urée peut être prélevée, et dans lequel le système de dosage est raccordé à une source d'air comprimé (6), dans lequel le système de dosage présente une pompe (3) pour acheminer la solution d'urée et dans lequel le système de dosage présente au moins une buse (5), par laquelle la solution d'urée peut être injectée dans le courant de gaz d'échappement (9) au moyen d'air comprimé, **caractérisé en ce que** le système de dosage présente un support de composants (20) selon l'une quelconque des revendications précédentes, dans lequel la pompe du système de dosage est montée en contact thermique avec le support de composants (20), sur le support de composants (20), dans lequel le support de composants (20) est en contact thermique avec un circuit d'agent réfrigérant du moteur à combustion interne.

13. Système de dosage selon la revendication 12, **caractérisé en ce qu'**une conduite de solution d'urée et/ou une conduite d'air comprimé (6) et/ou des soupapes (7, 14) et/ou des raccords (51, 52) sont montés en contact thermique avec le support de composants (20), sur le support de composants (20).
